# FASCICULE DE BREVET EUROPEEN

(11) **EP 0 859 160 B1**
(45) Date de publication et mention de la délivrance du brevet: **21.08.2002**
(21) Numéro de dépôt: 98400244.4
(22) Date de dépôt: 05.02.1998
(51) Int. Cl.: F16D 1/08

(54) **Dispositif pour l'accouplement correct d'un manchon fendu sur un troncon terminal d'arbre**
Vorrichtung zur genauen Positionierung eines langsgeschlitzten Muffenrohrs an einer Welle
Device for the correct positoning of a splitted sleeve on the terminal part of a shaft

(30) Priorité: 13.02.1997 FR 9701651
(43) Date de publication de la demande: 19.08.1998
(73) Titulaire: AUTOMOBILES PEUGEOT, 75116 Paris (FR); AUTOMOBILES CITROEN, 92200 Neuilly-sur-Seine (FR)
(72) Inventeur: Coignoux, Sébastien M., 92800 Puteaux (FR)
(74) Mandataire: Gendraud, Pierre

(56) Documents cités:
- EP-A- 0 292 442
- DE-A- 3 839 324
- DE-A- 4 013 810

## Description

L'invention concerne un dispositif pour l'accouplement correct d'un arbre avec un manchon fendu.

Elle se rapporte plus particulièrement au dispositif d'accouplement entre deux arbres, supérieur et inférieur, d'une colonne de direction.

Les dispositifs d'accouplement de tels arbres sont généralement constitués d'un manchon fendu relié à un joint de cardan solidaire d'une extrémité de l'arbre supérieur de la colonne de direction, dans lequel est engagé un tronçon d'extrémité de l'arbre inférieur de la colonne de direction qui est muni à une certaine distance de son extrémité d'un évidement pour le passage latéral d'une vis de serrage et de maintien axial du manchon sur le tronçon.

A cet effet, le manchon fendu est muni d'oreilles, formant une pince de serrage, percées de trous de réception de la vis.

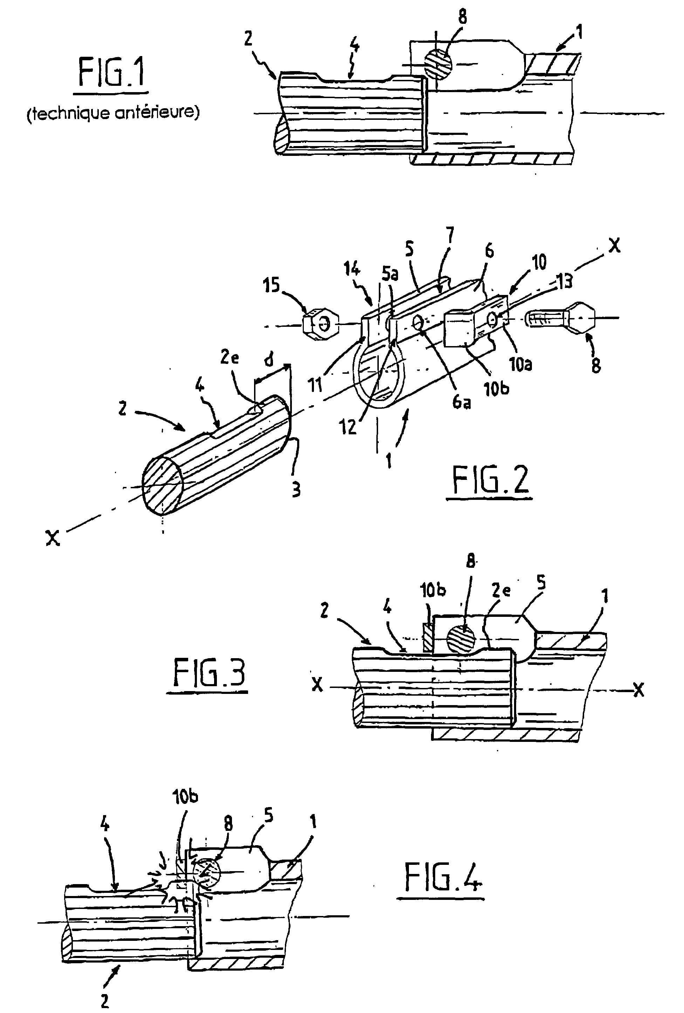

Lors de l'accouplement du manchon et de l'arbre, il est possible, comme visible sur la figure 1, que le tronçon de l'arbre soit insuffisamment engagé dans le manchon, c'est à dire n'atteigne pas la vis de serrage mise en place sur le manchon. L'accouplement est alors apparemment réalisé, apte à transmettre un couple, tandis que le maintien axial du manchon sur l'arbre inférieur n'est pas assuré.

Le document DE-A-40 13 810 décrit un dispositif pour l'accouplement correct d'un manchon fendu sur un tronçon terminal muni à une certaine distance de son extrémité d'un évidement pour le passage d'une vis de serrage et de maintien axial du manchon sur l'arbre, cette vis traversant, orthogonalement à l'arbre, deux oreilles du manchon formant pince de serrage, pour empêcher la mise en place de celle-ci en présence d'un tronçon d'arbre insuffisamment engagé dans le manchon, le détrompeur étant constitué d'une équerre comprenant une partie latérale traversée par la vis prolongée part la partie rabattue à angle droit, ladite partie rabattue s'étendant parallèlement à la vis et perpendiculairement à l'arbre en position correcte du manchon sur l'arbre, dans le logement prévu sur le tronçon terminal de l'arbre.

L'invention a pour but de créer un dispositif destiné à s'assurer que le tronçon terminal d'un arbre -ou axe- soit suffisamment engagé dans le manchon fendu afin que la vis de serrage empêche le désaccouplement par déplacement relatif axial des deux pièces.

A cet effet, la présente invention concerne un dispositif pour l'accouplement correct d'un manchon fendu sur un tronçon terminal d'arbre muni à une certaine distance de son extrémité d'un évidement pour le passage d'une vis de serrage et de maintien axial du manchon sur l'arbre, cette vis traversant, orthogonalement à l'arbre, deux oreilles du manchon formant pince de serrage, ledit dispositif comporte un détrompeur apte à coopérer avec la vis de serrage, pour empêcher la mise en place de celle-ci en présence d'un tronçon d'arbre insuffisamment engagé dans le manchon ledit détrompeur étant constitué d'une équerre comprenant une partie latérale traversée par la vis, prolongée par une partie rabattue à angle droit, ladite partie rabattue s'étendant parallèlement à la vis et perpendiculairement à l'arbre, en position correcte du manchon sur l'arbre, dans un logement prévu sur le tronçon terminal de l'arbre, caractérisé en ce que le logement est un méplat réalisé à une distance appropriée de l'extrémité de l'arbre, telle que l'engagement de la partie rabattue dans le logement corresponde à une position axiale correcte du manchon sur l'arbre, ledit méplat constituant à la fois ledit logement pour le détrompeur et l'évidement pour le passage de la vis.

Selon une caractéristique avantageuse de la présente invention, le détrompeur est solidaire de la vis de serrage.

D'autres caractéristiques et avantages de l'invention apparaîtront à la lecture de la description détaillée qui va suivre, pour la compréhension de laquelle on se reportera aux dessins annexés dans lesquels ;
- la figure 1 est une vue en coupe d'un dispositif d'accouplement selon la technique antérieure commentée ci-dessus;
- la figure 2 est une vue éclatée d'un tronçon d'arbre et d'un manchon fendu équipés du dispositif selon l'invention,
- la figure 3 est une vue de côté en coupe du dispositif de la figure 2, en position accouplement correct, et
- la figure 4 est une vue analogue à celle de la figure 3, montrant un montage d'accouplement impossible.

On a représenté sur la figure 2, d'une part un manchon fendu 1, comportant intérieurement des cannelures, constituant la partie femelle d'un accouplement et d'autre part un tronçon terminal d'arbre cannelé 2 constituant la partie mâle, destiné à être engagé dans la partie femelle 1 afin de transmettre un couple, et pourvu sur sa périphérie, à partir d'une certaine distance d de son extrémité 3, d'un évidement, par exemple un méplat 4, permettant le passage latéral d'une vis 8 de serrage et de maintien axial du manchon sur le tronçon.

Le manchon fendu 1 comporte, comme connu en soi, des oreilles parallèles 5, 6 de forme générale plane, délimitant une une fente radiale 7 et constituant une pince de serrage 14 du manchon 1 sur le tronçon de l'arbre 2.

Les oreilles 5, 6 sont percées de trous alignés 5a, 6a destiné à recevoir la vis 8 de serrage et de maintien axial du manchon sur l'arbre par butée de la vis sur le bord du méplat délimité par une portion d'extrémité 2e du tronçon.

Selon la présente invention, le manchon 1 est pourvu d'un dispositif 10 garantissant une mise en place correcte du manchon sur l'arbre 2 avant le serrage de la vis 8.

Ce dispositif 10 est constitué d'un détrompeur 10, barrette en L formant une équerre, qui est pourvue d'une partie latérale 10a parallèle à l'arbre 2 et prolongée par une partie 10b rabattue perpendiculairement à l'arbre de manière à être adjacent en position d'utilisation, au méplat 4 et au bord 11, 12 des oreilles 5, 6 tourné vers l'arbre 2.

La partie latérale 10a est appliquée transversalement sur l'une des oreilles 5, 6 du manchon 1, en position d'utilisation, et est pourvue d'un trou 13 afin d'être traversée par la vis de serrage 8.

La partie rabattue 10b se situe, en position d'utilisation, au droit du méplat 4, comme visible sur la figure 3, suivant un plan perpendiculaire à l'arbre, le méplat s'étendant axialement sur une longueur suffisante pour recevoir à la fois la vis 8 et la partie 10b du détrompeur, autrement dit, ce méplat délimite à la fois, en prolongement axial l'un de l'autre, un évidement pour le passage de la vis et un logement pour la partie 10b du détrompeur.

Afin de monter correctement le dispositif qui est l'objet de la présente invention, l'opérateur doit procéder de la manière suivante:

Le tronçon de l'arbre cannelé 2 est engagé dans le manchon fendu 1 en présentant le méplat 4 au droit de la fente 7 du manchon 1.

La vis 8 est alors ajustée dans les trous 5a, 6a et 13 respectivement des oreilles 5, 6 et de l'équerre 10 et serrée avec un écrou 15, comme visible sur les figures 2 et 3,la partie rabattue 10b de l'équerre 10 étant amenée de manière à se positionner transversalement à l'axe longitudinal X-X de l'arbre au droit du méplat 4 en étant adjacent à celui-ci et au bord 11, 12 des oreilles 5, 6 du manchon 1.

On notera que le détrompeur 10 et la vis 8 peuvent avantageusement être solidaires de manière à former une unique pièce.

Dans le cas où l'opérateur n'aurait pas introduit le tronçon terminal de l'arbre de façon adéquate, comme visible sur la figure 4, la vis de serrage ne peut être engagée, étant bloquée par la partie rabattue 10bde l'équerre qui bute contre la portion 2e de l'arbre 2. L'anomalie est par conséquent immédiatement détectée.

Selon une variante du dispositif, l'arbre cannelé est pourvu d'une gorge périphérique remplaçant le méplat pour permettre le passage de la vis de serrage et de maintien axial du manchon sur l'arbre.

On comprendra que la gorge doit posséder une largeur suffisante pour permettre le passage à la fois de la vis et du détrompeur, en position correcte de l'arbre dans le manchon.

Le dispositif qui vient d'être décrit fournit un moyen simple et peu coûteux permettant de s'assurer du bon positionnement du tronçon de l'arbre sur le manchon, ce qui évite les erreurs de montage.

## Revendications

1. Dispositif pour l'accouplement correct d'un manchon fendu (1) sur un tronçon terminal d'arbre (2) muni à une certaine distance (d) de son extrémité (3) d'un évidement (4) pour le passage d'une vis (8) de serrage et de maintien axial du manchon sur l'arbre, cette vis (8) traversant, orthogonalement à l'arbre, deux oreilles (5 et 6) du manchon (1) formant pince de serrage (14), comportant un détrompeur (10) apte à coopérer avec la vis (8) de serrage, pour empêcher la mise en place de celle-ci en présence d'un tronçon d'arbre (2) insuffisamment engagé dans le manchon (1), ledit détrompeur (10) est constitué d'une équerre comprenant une partie latérale (10a) traversée par la vis (8) prolongée par une partie rabattue (10b) à angle droit, ladite partie rabattue (10b) s'étendant parallèlement à la vis (8) et perpendiculairement à l'arbre (2), en position correcte du manchon (1) sur l'arbre (2), dans un logement (4) prévu sur le tronçon terminal de l'arbre (2) **caractérisé en ce que** le logement (4) est un méplat réalisé à une distance appropriée de l'extrémité de l'arbre, telle que l'engagement de la partie rabattue (10b) dans le logement (4) corresponde à une position axiale correcte du manchon (1) sur l'arbre (2), ledit méplat constituant à la fois ledit logement pour le détrompeur (10) et l'évidement (4) pour le passage de la vis (8).

2. Dispositif selon la revendication 1, **caractérisé en ce que** le détrompeur (10) est solidaire de la vis (8) de serrage.

## Patentansprüche

1. Vorrichtung zum korrekten Kuppeln einer geschlitzten Muffe (1) mit einem Endstück einer Welle (2), die in einem bestimmten Abstand (d) von ihrem Ende (3) mit einer Aussparung (4) für den Durchgang einer Schraube (8) zum axialen Festspannen und Halten der Muffe an der Welle versehen ist, wobei die Schraube (8) senkrecht zur Welle zwei Lappen (5 und 6) der Muffe (1) durchläuft, die eine Spannzange (14) bilden, wobei die Vorrichtung eine Unverwechselbarkeitseinrichtung (10) aufweist, die mit der Klemmschraube (8) zusammenwirken kann, um das Einsetzen von dieser zu verhindern, wenn ein Wellenstück (2) nicht genügend in die Muffe (1) eingefügt ist, wobei die Unverwechselbarkeitseinrichtung (10) aus einem Winkel mit einem seitlichen Abschnitt (10a) besteht, welcher von der Schraube (8) durchquert und von einem rechtwinklig umgebogenen Abschnitt (10b) verlängert wird, wobei sich der umgebogene Abschnitt (10b) bei richtiger Position der Muffe (1) bezüglich der Welle (2) parallel zur Schraube (8) und senkrecht zur Welle (2) in einer Aufnahme (4) befindet, die am Endstück der Welle (2) vorgesehen ist,
**dadurch gekennzeichnet, dass** die Aufnahme (4) eine Abflachung in geeignetem Abstand zum Ende der Welle ist, sodass das Einfügen des umgebogenen Abschnitts (10b) in die Aufnahme (4) einer korrekten axialen Position der Muffe (1) bezüglich der Welle (2) entspricht, wobei die Abflachung zugleich die Aufnahme für die Unverwechselbarkeitseinrichtung (10) und die Aussparung (4) für den Durchgang der Schraube (8) bildet.

2. Vorrichtung nach Anspruch 1, **dadurch gekennzeichnet, dass** die Unverwechselbarkeitseinrichtung (10) mit der Klemmschraube (8) fest verbunden ist.

## Claims

1. Device for the correct coupling of a split sleeve (1) on an end section of a shaft (2) provided, a certain distance (d) from its end (3), with a cutout (4) for the passage of a screw (8) for clamping and axial maintenance of the sleeve on the shaft, this screw (8) passing, orthogonally to the shaft, through two lugs (5 and 6) of the sleeve (1) forming a holding collet (14), having a locating pin (10) suitable for co-operating with the clamping screw (8), to prevent the latter from being positioned when a section of shaft (2) is insufficiently engaged in the sleeve (1), said locating pin (10) is constituted by an angle bracket comprising a side part (10a) though which the screw (8) passes, said side part being extended by a right-angled folded-back part (10b), said folded-back part (10b) extending parallel to the screw (8) and perpendicular to the shaft (2), when the sleeve (1) is in the correct position on the shaft (2), in a housing (4) provided on the end section of the shaft (2) **characterised in that** the housing (4) is a flat section made a suitable distance away from the end of the shaft, such that the engagement of the folded-back part (10b) in the housing (4) corresponds to a correct axial position of the sleeve (1) on the shaft (2), said flat section constituting both said housing for the locating pin (10) and the cutout (4) for the passage of the screw (8).

2. Device according to Claim 1, **characterised in that** the locating pin (10) is integral with the clamping screw (8).
